# EUROPÄISCHE PATENTSCHRIFT

(11) **EP 1 659 308 B1**
(45) Veröffentlichungstag und Bekanntmachung des Hinweises auf die Patenterteilung: **11.02.2009**
(21) Anmeldenummer: 05023493.9
(22) Anmeldetag: 27.10.2005
(51) Int. Cl.: F16D 43/284, F16D 25/065

(54) **Schaltbare Kupplungsanordnung zur Ankopplung eines Nebenaggregates**
Switchable clutch arrangement to couple an auxiliary device
Dispositif d'embrayage pour l'accouplement d'un dispositif auxiliiaire

(30) Priorität: 19.11.2004 AT 19402004
(43) Veröffentlichungstag der Anmeldung: 24.05.2006
(73) Patentinhaber: MAN Nutzfahrzeuge Österreich AG, 4400 Steyr (AT)
(72) Erfinder: Leitenmayr, Franz, Ing., 4320 Perg (AT); Rammer, Franz, Dipl.-Ing., 4493 Wolfern (AT); Raab, Gottfried, Dipl.-Ing., 4320 Perg (AT)

(56) Entgegenhaltungen:
- US-A- 4 456 110
- US-A- 5 469 950
- US-B1- 6 315 097

## Beschreibung

Gegenstand der Erfindung ist eine schaltbare Kupplungsanordnung zum Ankoppeln eines Nebenaggregates an die Antriebswelle einer als Antriebsmotor in einem Fahrzeug betriebenen Brennkraftmaschine, wobei eine hydraulisch betätigte Kupplung vorgesehen ist, die aus einem ersten Teil besteht, der mit der Antriebswelle der Bennkraftmaschine drehverbunden ist und einem zweiten Teil der mit der Antriebswelle des Nebenaggregates drehverbunden ist. Weiter ist eine die Kupplung betätigende erste Pumpanordnung vorgesehen, die in dem zweiten Teile der Kupplung angeordnet und durch die relative Drehbewegung des zweiten Teils der Kupplung relativ zum ersten Teil der Kupplung mit einer Kraft beaufschlagt ist, die den Pumpmechanismus betätigt.

Eine Kupplung der vorstehend beschriebenen Art ist aus der US 4 456 110 bekannt. Nachteilig bei solchen Anordnungen ist einerseits, dass ein gezieltes Zuschalten bzw. Anschalten von außen nicht vorgesehen ist und andererseits, dass zur Aufrechterhaltung der Kopplung beider Kupplungsteile immer eine Drehzahldifferenz zwischen diesen notwendig ist. Das Letztere bedeutet funktional, dass, nachdem die Kupplung durch den Druckanstieg im Betätigungskolben geschlossen hat, keine Drehzahldifferenz zwischen den Kupplungsteilen mehr vorhanden ist, so dass der Druck im Betätigungskolben durch die unvermeidbaren Leckagen wieder abfällt und die Kupplung kurzzeitig löst. Die sich dadurch einstellende Drehzahldifferenz führt zur erneuten Betätigung des Pumpmechanismus und dadurch zum erneuten Schließen der Kupplung. So wechseln Phasen der starren Kopplung der beiden Kupplungsteile mit Phasen in denen die Kupplungsteile eine Relativbewegung zueinander ausführen. Ein derartiges undefiniertes Kupplungsverhalten ist beim gezielten schaltbaren Ankoppeln von Nebenaggregaten an die Kurbelwelle einer in ein Fahrzeug eingebauten Brennkraftmaschine jedoch unerwünscht. Der auftretende Schlupf führt zu einer Verlustleistung, die wegen des dadurch erhöhten Kraftstoffverbrauchs ebenfalls unerwünscht ist.

Ausgehend von dem vorstehend beschriebenen bekannten Kupplungsprinzip ist es deshalb Aufgabe der Erfindung, bekannte Kupplungen so zu verbessern und weiterzubilden, dass stets definierte Kopplungszustände gegeben sind.

Gelöst wird die Aufgabe durch die kennzeichnenden Merkmale des Patentanspruches 1 vorteilhafte Ausgestaltungen der Erfindung sind in den Unteransprüchen gekennzeichnet.

Das Vorsehen eines schaltbaren Ventils in der externen Versorgungsleitung für die Hydraulikflüssigkeit ermöglicht ein Zu- bzw. Abschalten der Kupplung lediglich über die Zuführung der Hydraulikflüssigkeit und minimiert so vorteilhaft den Aufwand für die Steuerung. Die Aktivierung der zweiten Pumpanordnung über die Mitnahme des zweiten Teils der Kupplung durch den ersten Teil der Kupplung führt in vorteilhafter Weise dazu, dass eine unterbrechungsfrei Aufrechterhaltung des Drucks in den Betätigungskolben erreicht wird, die Kupplung bleibt nach einmaliger Auslösung geschlossen, bis die definierte Abschaltung erfolgt. Es tritt also kein Schlupf und damit keine Verlustleistung auf.

Durch die Kombination einer Exzenter- oder Nockenanordnung an dem ersten Kupplungsteil mit einer Exzenter- oder Nockenanordnung gestellfest mit dem Nebenaggregat bzw. der Brennkraftmaschine lässt sich in vorteilhafter Weise erreichen, dass die Pumpanordnung Platz sparend in dem zweiten Teil der Kupplung angeordnet werden kann.

Die beiden Pumpanordnungen lassen sich besonders einfach und damit vorteilhaft dadurch realisieren, dass jeweils ein durch den Pumpkolben beaufschlagter Pumpkolbenraum vorgesehen ist, den jeweils in Richtung des niedrigeren Druckes sperrende Rückschlagventile abriegeln.

Die Vereinigung der beiden Pumpanordnungen im zweiten Teil der Kupplungsanordnung und ihre jeweilige Ausbildung als Kolbenpumpen schafft die Voraussetzung für die Zusammenfassung der Pumpkolbenräume der ersten und der zweiten Pumpanordnung. Diese Zusammenfassung führt zu einer vorteilhaften weitere Minimierung des baulichen Aufwandes und damit der Kosten und des für die Anordnung benötigten Platzbedarfes.

Durch das Vorsehen einer Saugdrossel, die es erlaubt, über den Druckanstieg im Hochdruckbereich der Pumpanordnung die Zufuhr der Hydraulikflüssigkeit zu unterbinden, wird eine sehr einfache, effiziente und damit vorteilhafte Druckkonstanthaltung erreicht.

Zum schnellen Öffnen der Kupplung nach dem Abschalten der Zufuhr der Hydraulikflüssigkeit zum Gesamtsystem kann in vorteilhafter Weise ein Absteuerkolben vorgesehen sein, der bei Druckabfall im Niederdruckbereich der Anordnung den Hochdruckbereich zu einem drucklosen Bereich hin öffnet.

Besonders einfach und damit vorteilhaft lässt sich die eigentliche Kupplung als Segmentkupplung oder als Scheibenkupplung realisieren.

Die Integration einer erfindungsgemäßen Kupplungsanordnung in einen Luftpresser erlaubt es, die Ölversorgung des Luftpressers mit der für die Kupplungsanordnung zu verbinden, so dass in besonders vorteilhafter Weise die Ansteuerung der Kupplungsanordnung mit dem bedarfsweisen Schmieren des Luftpressers verbunden werden kann. Der Ansteueraufwand und der Aufwand für Ölversorgung und Schmierung reduzieren sich so auf ein Minimum. Die Versorgung der Schmierstellen des Luftpressers und die Versorgung der Kupplungsanordnung mit Öl erfolgt dabei vorteilhaft über eine in der Kurbelwelle des Luftpressers geführte Ölbohrung.

Beispiele aus denen sich weitere Vorteile der erfindungsgemäßen Kupplungsanordnung ergeben, sind nachfolgend unter Zuhilfenahme der Zeichnungen näher erläutert, es zeigen:
- Fig. 1: Eine Schnittdarstellung eines Luftpressers mit Kupplungsanordnung und Ansteuerung
- Fig. 2: Einen Schnitt durch die Anordnung nach Fig. 1 entlang der Schnittlinie E-E
- Fig. 3: Eine vergrößerte Darstellung der Kupplungsanordnung nach Fig. 1
- Fig. 4: Eine Ausführung der Kupplungsanordnung mit einer Scheibenkupplung
- Fig. 4a: Einen Schnitt durch die Anordnung nach Fig. 4 entlang der Schnittlinie F-F

Eine Kupplungsanordnung der erfindungsgemäßen Art kann, wie bereits erwähnt, zur schaltbaren Ankopplung eines Luftpressers an die Antriebswelle einer in ein Nutzfahrzeug eingebauten Brennkraftmaschine verwendet werden. Derartige Nutzfahrzeuge benötigen bekanntermaßen, z.B. für die Betätigung der Bremsen, ein Druckluftsystem, das über einen entsprechenden Druckluftvorratsbehälter und einen Drucklufterzeuger verfügt. Erzeugt wird die Druckluft üblicherweise von einem Kolbenluftpresser, der von der Antriebswelle der Brennkraftmaschine unter Zwischenschaltung einer Getriebeanordnung angetrieben ist.

Eine Anordnung, wie sie vorstehend charakterisiert ist, wird zur nachfolgenden Erläuterung der erfindungsgemäßen Kupplungsanordnung und ihrer Funktionsweise herangezogen ohne dass die erfindungsgemäße Kupplungsanordnung auf diesen Anwendungsfall begrenzt wäre. Die Erfindung lässt sich vielmehr für die schaltbare Ankopplung aller denkbaren Nebenaggregate an die Antriebswelle einer Brennkraftmaschine verwenden.

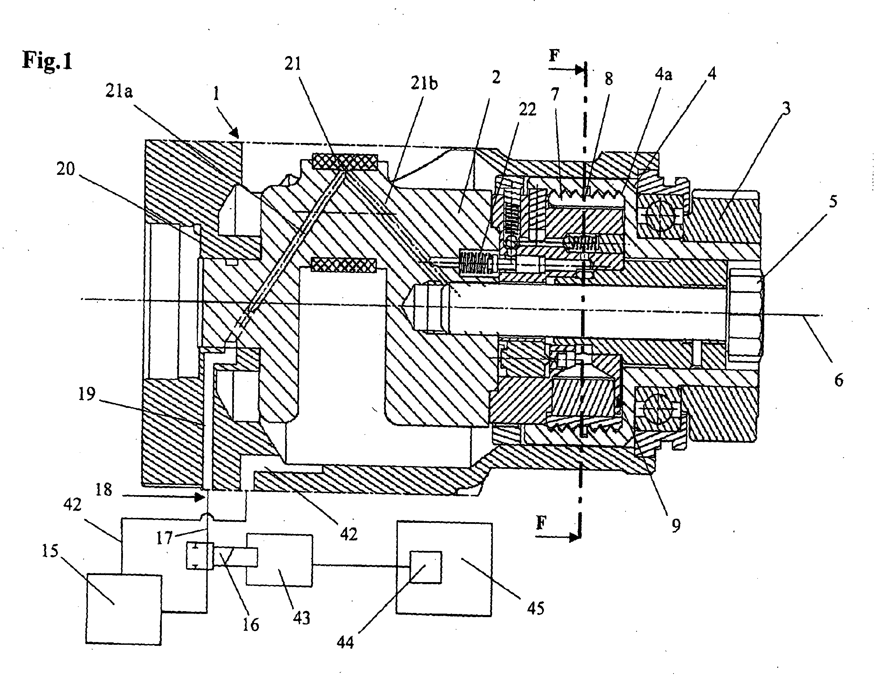

In Fig. 1 ist, geschnitten dargestellt, ein Luftpresser 1 gezeigt, dessen Kurbelwelle 2 über eine im folgenden näher erläuterte Kupplungsanordnung mit einem Antriebsritzel 3 verbindbar ist. Das Antriebsritzel 3 läuft, angetrieben durch die Antriebswelle der Brennkraftmaschine (nicht dargestellt) permanent um. Die Kupplungsanordnung besteht aus zwei Teilen, dem ersten Teil, der eine mit dem Antriebsritzel 3 drehfest verbundene Kupplungsglocke 4 umfasst, die an ihrer Innenseite eine Reibfläche 4a aufweist. Mit der Kurbelwelle 2 des Luftpressers 1 ist ein zweiter Teil der Kupplungsanordnung mittels einer Durchgangsschraube 5 drehfest verbunden, wobei der zweite Teil , konzentrisch um seine Drehachse 6 kreissegmentartig angeordnet, Reibbeläge 7 aufweist, die entgegen der rückstellenden Kraft einer Ringfeder 8 gegen die Reibfläche 4a der Kupplungsglocke 4 pressbar sind. Das Anpressen erfolgt über Betätigungszylinder 9, die auf die Reibbeläge 7 wirken und mit einer Hydraulikflüssigkeit (im gewählten Beispiel Motoröl) beaufschlagt sind.

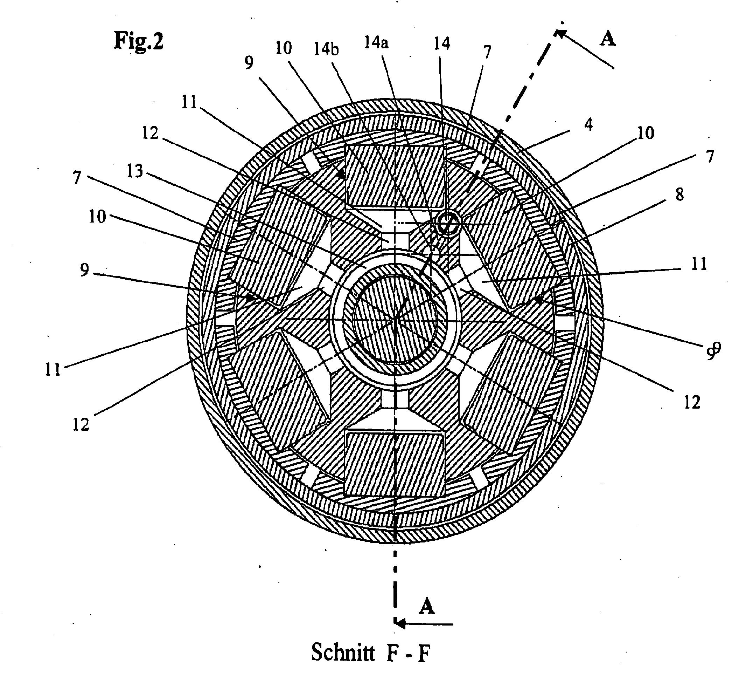

Die Anordnung der Betätigungszylinder 9 in ihrer Orientierung zur Rotationsachse 6 ist in Fig. 2 dargestellt. Die Fig. 2 zeigt dabei einen Schnitt entlang der in Fig. 1 eingezeichneten Schnittlinie F-F. Dem durch die Kupplungsglocke 4 gebildeten ersten Teil der Kupplungsanordnung gegenüberliegend sind, in Richtung Rotationsachse 6 innen liegend, im zweiten Teil der Kupplungsanordnung kreissegmentartig angeordnet, Reibbeläge 7 vorgesehen, die durch die Kolben 10 der Betätigungszylinder 9 entgegen der rückstellenden Kraft der Ringfeder 8 in Richtung Kupplungsglocke 4 pressbar sind. Zum Anpressen der Reibbeläge 7 an die Kupplungsglocke 4 wird den Kolbenräumen 11 der Betätigungszylinder 9 über Anschlussbohrungen 12, die mittels eines konzentrisch zur Rotationsachse angeordneten Ringkanals 13 untereinander verbunden sind, von einem Hochdruckraum 14 der Pumpanordnung Hydraulikflüssigkeit unter hohem Druck zugeführt.

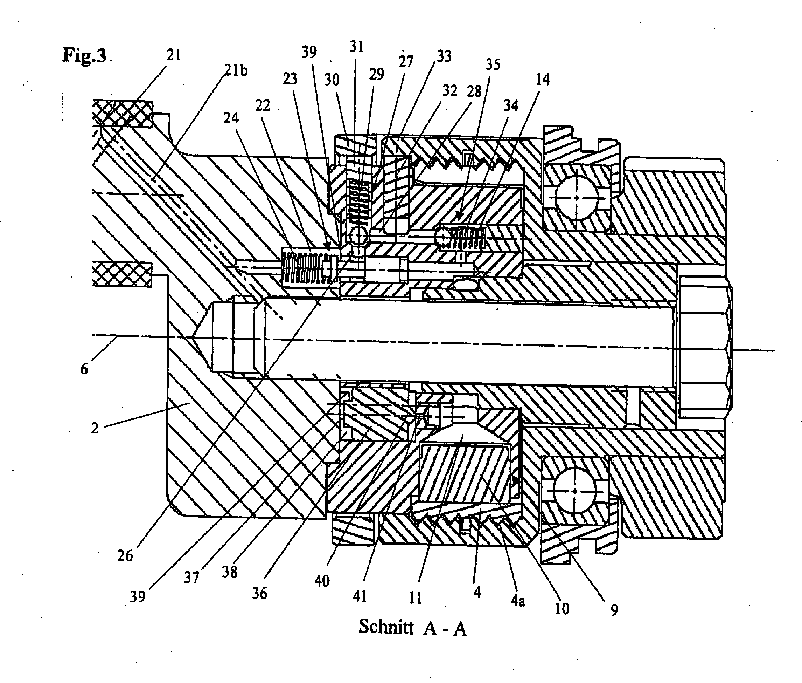

Die Erzeugung des Hochdrucks im Hydrauliksystem und die Funktion der Kupplungsanordnung sind nachfolgend in Verbindung mit der bereits angesprochenen Fig. 1 und der Fig. 3, die Details der Fig. 1 vergrößert zeigt, näher beschrieben. Wie aus Fig. 1 entnehmbar, ist ein Vorratsbehälter 15, in dem sich der Schmieröl-Vorrat für die Brennkraftmaschine (nicht dargestellt) befindet, über eine Ölpumpe (nicht dargestellt) mit einem Steuerventil 16 verbunden. Bei dem im Beispiel gezeigten Steuerventil 16 handelt es sich um ein elektrisch steuerbares Ventil, es kann aber natürlich auch ein mechanisch steuerbares Ventil eingesetzt werden. Der Ausgang des Steuerventils 16 führt über eine Leitung 17 zur Schmierölzuführung 18 des Luftpressers 1. Von dort ausgehend wird das Schmieröl bei geöffnetem Steuerventil 16 an die Schmierstellen des Luftpressers 1 verteilt. So führt ein Ölkanal 19 von der Schmierölzuführung 18 zu einem Kurbelwellengleitlager 20 und von dort über eine Ölbohrung 21a in der Kurbelwelle 2 zu einem Pleuelgleitlager 21 für die Lagerung des Verdichterkolbens (nicht dargestellt). Von dem Pleuelgleitlager 21 setzt sich die Ölbohrung 21 b in der Kurbelwelle 2 zum Niederdruckraum 22 der Hydraulik-Pumpanordnung, die im zweiten Teil der Kupplung angeordnet ist, fort. Wegen der besseren Darstellung wird nun auf Fig. 3 Bezug genommen. Im Niederdruckraum 22 ist eine Saugdrossel 23 bestehend aus einer Druckfeder 24 und einem in einer Bohrung geführten Saugdrosselkolben 25 angeordnet. Der Saugdrosselkolben 25 wird durch eine erste Druckfeder 24 in seine Offen-Richtung federbeaufschlagt, so dass, vom Niederdruckraum 22 über die Saugdrossel 23 und eine erste Verbindungsbohrung 26 sowie ein mittels einer zweiten Druckfeder 29 in seine Geschlossen-Richtung federbeaufschlagtes erstes Rückschlagventil 27, eine Verbindung zu einem Pumpkolbenraum 28 besteht. Auf den Pumpkolbenraum 28 wirkt ein mittels der Druckfeder 29 in Richtung auf einen zweiten Exzenterring 30 federbeaufschlagter zweiter Pumpkolben 31, der zweite Exzenterring 30 ist zum Gehäuse des Luftpressers 1 gestellfest, kann aber auch Teil dieses Gehäuses sein. Die Exzentrizität des zweiten Exzenterrings 30 bezieht sich auf die Rotationsachse 6 und entspricht dem Hub des zweiten Pumpkolbens 31. Zu einer Pumpbewegung kommt es dann, wenn zwischen dem gestellfesten zweiten Exzenterring 30 und dem zweiten Teil der Kupplung, in der der zweite Pumpkolben 31 angeordnet ist, eine Drehzahldifferenz vorliegt.

Ein erster Pumpkolben 32 wirkt ebenfalls auf den Pumpkolbenraum 28, wenn in diesem das über die Saugdrossel 27 zuströmende Öl den ersten Pumpkolben 32 an einen ersten Exzenterring 33, der an die Kupplungsglocke 4 angeformt ist, anpresst. Die Exzentrizität des ersten Exzenterrings 33 bezieht sich ebenfalls auf die Rotationsachse 6 und entspricht auch hier dem Hub des ersten Pumpkolbens 32.

Der Pumpkolbenraum 28 steht über ein mittels einer dritten Druckfeder 34 in seine Geschlossen-Richtung federbeaufschlagtes Rückschlagventil 35 mit dem Hochdruckraum 14 in Verbindung. Vom Hochdruckraum 14 führt eine zweite Verbindungsbohrung 14a zum Saugdrosselhochdruckraum 14b, der einerseits mit dem Saugdrosselkolben 25 in Wirkverbindung steht und andererseits über den Ringkanal 13 mit den Kolbenräumen 11 der Betätigungszylinder 9 verbunden ist, wie dies auch aus der Fig. 2 hervorgeht.

Die Druckkonstanthaltung im Hochdruckbereich der vorstehend beschriebenen Anordnung wird über die Saugdrossel 23 bewerkstelligt, deren Saugdrosselkolben 25 über das im Saugdrosselhochdruckraum 14b befindliche Öl bei entsprechendem Öldruck gegen die Kraft der Feder 24 in eine Stellung gedrückt wird, in der er die erste Verbindungsbohrung 26 verschließt, so dass von der Pumpanordnung kein Öl mehr gefördert werden kann, bis durch den abfallenden Druck im Hochdruckbereich die erste Verbindungsbohrung 26 wieder freigegeben wird.

Zum schnellen Öffnen der Kupplung ist ein in einer Bohrung geführter Absteuerkolben 36 vorgesehen, der auf seiner einen Seite 37 über einen Absteuerkolbenraum 38 und eine Ringnut 39 mit dem Niederdruckraum 22 verbunden ist. Auf seiner anderen Seite ist an dem Absteuerkolben 36 eine Kegelspitze 40 angeordnet, die eine Absteuerbohrung 41 in einem der Kolbenräume 11 der Betätigungszylinder 9 verschließt, wenn der im Absteuerkolbenraum 38 herrschende Druck über die relativ große beaufschlagte Fläche eine Kraft auf den Absteuerkolben 36 ausübt, die größer ist als die vom Druck im Kolbenraum 11 des Betätigungszylinders 9 auf die verhältnismäßig kleine Fläche der Kegelspitze aufgebrachte Kraft. Wird kein Öl mehr von der Versorgungsleitung in den Niederdruckraum 22 gefördert, fällt der Druck ab und der Absteuerkolben 36 öffnet über die Kegelspitze 40 die Absteuerbohrung 41. Das entweichende Öl kann über nicht näher dargestellte Kanäle in den Kurbelwellenraum des Luftpressers 1 und von dort über eine Rückflussleitung 42 in den Vorratsbehälter 15 zurück fließen.

Zur Steuerung der Kupplung 1 ist, wie in Fig. 1 gezeigt, eine Steuereinrichtung 43 vorgesehen, die einerseits das Steuerventil 16 ansteuert und andererseits von einem Drucksensor 44 beaufschlagt ist, der sich im Druckluftsystem 45 an einer Stelle befindet, an der der im Druckluftvorratsbehälter herrschende Druck auf ihn wirkt. Die Steuereinheit 43 vergleicht das vom Drucksensor 44 abgegriffene, dem Systemdruck des Druckluftsystems 45 proportionale Signal mit einem unteren und einem oberen Schwellwert, bei Unterschreiten des unteren Schwellwertes öffnet die Steuereinheit 43 das Steuerventil 16, bei Überschreiten des oberen Schwellwertes wird das Steuerventil 16 durch entsprechende Ansteuerung geschlossen.

Abweichend von der vorstehend beschriebenen Ausführung kann das Steuerventil 16 natürlich auch durch einen rein mechanisch wirkenden Druckregler gesteuert werden, derartige Druckregler sind allgemein bekannt, so dass sich eine detaillierte Beschreibung erübrigt.

Zur Darstellung der Funktion der gesamten Anordnung wird angenommen, dass der Druck im Druckluftvorratsbehälter oberhalb des unteren Schwellwertes liegt. In diesem Fall ist das Steuerventil 16 geschlossen, so dass kein Öl in den Luftpresser gefördert werden kann. In Folge davon fördert die Pumpanordnung auch kein Öl in den Hochdruckbereich der Kupplung bzw. in die mit diesen verbundenen Kolbenräume 11 der Betätigungszylinder 9. Die Reibbeläge 7 und mit diesen die Kolben 10 werden durch die Ringfeder 8 in ihre Ruheposition gedrückt, die über das Antriebsritzel 3 angetriebene Kupplungsglocke 4 dreht sich gegenüber den Reibbelägen 7 und damit gegenüber dem zweiten Teil der Kupplungsanordnung frei.

Fällt der Druck im Druckluftvorratsbehälter unter den unteren Schwellwert öffnet die Steuereinheit 43 durch entsprechende Ansteuerung das Steuerventil 16, so dass, von dem Ölvorratsbehälter 15 mittels der Ölpumpe der Brennkraftmaschine (nicht dargestellt) über das Steuerventil 16, die Leitung 17 und die Schmierölzuführung 18, Öl in den Luftpresser 1 gefördert wird. Im Luftpresser 1 verteilt sich das Schmieröl über den Ölkanal 19 zum Kurbelwellen-Gleitlager 20, über die Ölbohrung 21a zum Pleuel-Gleitlager 21 und über die Ölbohrung 21 b zum Niederdruckraum 22. Im Niederdruckraum 22 und damit in dem durch die Ringnut 39 mit dem Niederdruckraum 22 verbundenen Absteuerkolbenraum 38 baut sich ein Druck auf, der den Absteuerkolben 36 mit seiner Kegelspitze 40 in die Absteuerbohrung 41 presst und damit den angrenzenden Kolbenraum 11 und mit diesem den gesamten Hochdruckbereich abschließt. Durch die Federbeaufschlagung mittels der ersten Druckfeder 24 befindet sich der Saugdrosselkolben 25 in seiner Offen-Stellung, so dass das Öl aus dem Niederdruckraum 22 weiterhin über die erste Verbindungsbohrung 26 zum ersten Rückschlagventil 27 gelangt. Durch den ansteigenden Öldruck öffnet das erste Rückschlagventil 27 gegen die Kraft der Feder 29 und der Pumpkolbenraum füllt sich mit Öl. Das eindringende Öl treibt den ersten Pumpkolben 32 in Richtung des ersten Exzenterrings 33, bis der erste Pumpkolben 32 an diesem anliegt. Durch die Rotation der Kupplungsglocke 4 und damit des an ihr angeformten ersten Exzenterrings 33 wird dessen Exzentrizität in eine Pumpbewegung des ersten Pumpkolbens 32 umgesetzt, so dass bei jeder Abwärtsbewegung durch den damit verbundenen Druckanstieg im Pumpkolbenraum 28 das erste Rückschlagventil 27 geschlossen und das zweite Rückschlagventil 35 entgegen der Kraft der dritten Druckfeder 34 geöffnet wird, wodurch das Öl in den Hochdruckraum 14 gelangt. Bei der nächsten Aufwärtsbewegung des ersten Pumpkolbens 32 fällt der Druck im Pumpkolbenraum 28 wieder, das zweite Rückschlagventil 35 schließt und das erste Rückschlagventil 27 öffnet, so dass Öl über das erste Rückschlagventil 27 in den Pumpkolbenraum 28 nachströmt.

Durch die Pumpbewegung des ersten Pumpkolbens 32 steigt der Druck im Hochdruckraum 14 und damit in den mit diesem verbundenen Kolbenräumen 11 der Betätigungszylinder 9 an, wodurch die Kolben 10 die Reibbeläge 7 entgegen der Kraft der Ringfeder 8 nach außen pressen, bis Reibschluss zwischen diesen und der Reibfläche 4a der Kupplungsglocke 4 entsteht und diese ihre Rotationsbewegung auf den zweiten Teil der Kupplungsanordnung und damit auf die Kurbelwelle 2 des Luftpressers 1 überträgt.

Der Reibschluss zwischen den beiden Kupplungsteilen unterbindet die Pumpbewegung des ersten Pumpkolbens 32, die eine Drehzahldifferenz zwischen beiden Kupplungsteilen voraussetzt, die Druckerzeugung wird nun von dem zweiten Pumpkolben 31 übernommen, der bisher in Ruhe war. Durch die einsetzende Rotation des zweiten Kupplungsteils läuft der zweite Pumpkolben 31 gegen den zu dem Gehäuse des Luftpressers 1 gestellfesten zweiten Exzenterring 30 an und wird dadurch in eine Pumpbewegung versetzt.

Überdruck im Hochdruckraum 14 und den damit verbundenen Räumen wird dadurch vermieden, dass der Saugdrosselkolben 25 mit dem im Hochdruckraum 14 herrschenden Druck beaufschlagt ist. Bei Druckanstieg wird der Saugdrosselkolben 25 so gegen die Kraft der ersten Druckfeder 24 verschoben, dass dieser die erste Verbindungsbohrung 26 verschließt, wodurch die Ölzufuhr zum Pumpkolbenraum 28 und damit zum Hochdruckraum 14 unterbunden wird. Die Unterbrechung hält dabei so lange an, bis der Saugdrosselkolben durch die Kraft der ersten Druckfeder 24 gegen den abfallenden Druck im Hochdruckraum 14 wieder in seine Offen-Stellung zurück verschoben ist.

Steigt der Luftdruck im Druckluftsystem 45 über den oberen Schwellwert an, wird dies über die Steuereinheit 43 festgestellt und das Steuerventil 16 durch entsprechende Ansteuerung geschlossen. Der Druckabfall im Ölversorgungssystem des Luftpressers 1 setzt sich über den Niederdruckraum 22 und die Ringnut 39 in den Absteuerkolbenraum 38 fort, wodurch der Absteuerkolben 36 durch den im Kolbenraum 11 herrschenden höheren Druck in eine Position gedrückt wird, die das Abfließen des Öls aus den Kolbenräumen 11 der Betätigungszylinder 9 und damit aus dem Hochdruckbereich der Pumpanordnung erlaubt. Das abfließende Öl gelangt über nicht näher gezeigte Kanäle in den Kurbelwellenraum des Luftpressers 1 und von dort über eine Rücklaufleitung 42 in den Vorratsbehälter 15 zurück.

Die vorstehend beschriebene Anordnung erlaubt eine sehr einfache Zuschaltung des Luftpressers durch Steuerung der Ölzufuhr zum Luftpresser in Abhängigkeit von Luftdruck im Druckluftsystem des Fahrzeugs.

Der Vorteil dieser Vorgehensweise besteht insbesondere darin, dass die Ölzuführung zum Luftpresser ohnehin für Schmierzwecke vorhanden ist, aber nur für die Zeiträume benötigt wird, in denen der Luftpresser in Betrieb ist. Durch die Steuerung bzw. Aktivierung des Luftpressers über die Ölzufuhr wird das Problem der bedarfsabhängigen Schmierung und das der Zuschaltung durch nur eine Maßnahme gelöst.

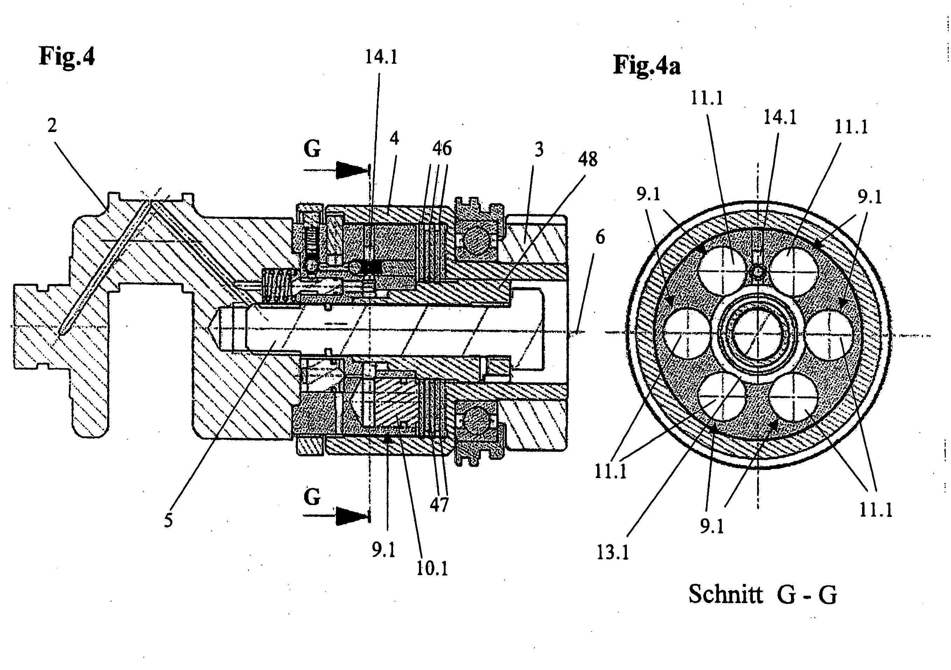

Die erfindungsgemäße Kupplungsanordnung ist selbstverständlich nicht auf eine Segmentkupplung, wie sie im vorstehenden Beispiel beschrieben ist, begrenzt, es lassen sich vielmehr alle hydraulisch betätigbaren Reibkupplungen verwenden. So zeigt die Anordnung gemäß Fig. 4 eine Lamellenkupplung bekannter Art, die in die erfindungsgemäße Kupplungsanordnung integriert ist. Nachdem die Pumpanordnung zur Betätigung der Kupplung und ihre Funktionsweise mit der vorstehend in Verbindung mit den Figuren 1 bis 3 beschriebenen identisch ist, wird hierzu auf diese Beschreibungsteile verwiesen, die nachfolgenden Ausführungen betreffen nur die Kupplung selbst.

Wie in der Schnittdarstellung in Fig. 4 erkennbar, handelt es sich bei der dort dargestellten Kupplung um eine Mehrscheibenkupplung. Die ersten Scheiben 46 sind in der den ersten Teil der Kupplung bildenden Kupplungsglocke 4 verankert, während die zweiten Scheiben 47 drehfest an einem Trägerteil 48 angeordnet sind, das über die Durchgangsschraube 5 an dem zweiten Teil der Kupplung bzw. der Kurbelwelle 2 des Luftpressers drehfest befestigt ist. Die Betätigungszylinder 9.1 sind in ihrer Wirkrichtung so angeordnet, dass die Kolben 10.1 parallel zur Rotationsachse 6 wirken.

Die Fig. 4a zeigt in einem Schnitt entlang der Schnittlinie G-G (Fig. 4) die Kolbenräume 11.1 der Betätigungszylinder 9.1. Die Anordnung der Kolbenräume 11.1 ist dabei so getroffen, dass diese den Ringkanal 13.1 schneiden und so mit dem Hochdruckraum 14.1 der Pumpanordnung verbunden sind.

Die Funktion derartiger Scheibenkupplungen ist bekannt, die Kolben 10.1 rücken bei Druckanstieg in den Kolbenräumen 11.1 auf die ersten und zweiten Kupplungsscheiben 46, 47 vor und pressen diese zusammen, so dass über den entstehenden Reibschluss der erste Teil der Kupplung, also die über das Antriebsritzel 3 in Rotation versetzte Kupplungsglocke 4, den zweiten Teil der Kupplung und mit diesem die Kurbelwelle 2 des Luftpressers mitnimmt. Gelöst wird die Kupplung dadurch, dass bei Druckabfall in den Kolbenräumen eine Feder (nicht dargestellt) die beiden Teile der Kupplung wieder in ihre Ausgangslage zurück drückt.

Wie bereits erwähnt, unterscheiden sich Ansteuerung und Funktion der Pumpanordnung in diesem Beispiel nicht von dem bereits zu Fig. 1 bis 3 beschriebenen, so dass auf eine nochmalige Darstellung verzichtet werden kann, es wird hierzu auf die einschlägigen Teile der Beschreibung zu den Figuren 1 bis 3 verwiesen.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, es kommt diesen Ausführungsformen somit nur Beispielcharakter zu.

## Patentansprüche

1. Schaltbare Kupplungsanordnung zum Ankoppeln eines Nebenaggregates an die Antriebswelle einer als Antriebsmotor in einem Fahrzeug betriebenen Brennkraftmaschine, wobei
- eine hydraulisch betätigte Kupplung vorgesehen ist, die aus einem ersten Teil besteht, der mit der Antriebswelle der Bennkraftmaschine drehverbindbar ist und einem zweiten Teil der mit der Antriebswelle des Nebenaggregates drehverbindbar ist,
- eine die Kupplung betätigende erste Pumpanordnung (27,28,32,33,35) vorgesehen ist, die in dem zweiten Teile der Kupplung angeordnet und durch die relative Drehbewegung des zweiten Teils der Kupplung relativ zum ersten Teil der Kupplung mit einer Kraft beaufschlagt ist, die den Pumpmechanismus betätigt,
**dadurch gekennzeichnet, dass**
- die erste Pumpanordnung (27, 28, 32, 33, 35) eingangsseitig über ein externes schaltbares Ventil (16) mit einer Versorgungsleitung für Hydraulikflüssigkeit verbunden ist und ausgangsseitig eine Verbindung zu einem Kolbenraum (11, 11.1) wenigstens eines Betätigungszylinders (9, 9.1) aufweist, dessen Kolben (10, 10.1) auf den Kupplungsmechanismus wirkt, derart, dass beim Fördern der Hydraulikflüssigkeit mittels der ersten Pumpanordnung (27, 28, 32, 33, 35) von der Versorgungsleitung in den Betätigungszylinder (9. 9.1) die Kupplungsflächen gegen die Kraft einer Rückstellfeder (8) aneinander gepresst werden,
- in dem zweiten Teil der Kupplung in dem sich die erste Pumpanordnung (27, 28, 32, 33, 35) befindet, eine zweite Pumpanordnung (27, 28, 30, 31, 35) angeordnet ist, die durch die Drehbewegung des zweiten Teils der Kupplung relativ zum Gehäuse des Nebenaggregates (1) oder relativ zum Gehäuse der Brennkraftmaschine mit einer Kraft beaufschlagt ist, die den Pumpmechanismus der zweiten Pumpanordnung (27, 28, 30, 31, 35) betätigt,
- die zweite Pumpanordnung (27, 28, 30, 31, 35) eingangsseitig über das schaltbare Ventil (16) mit der Versorgungsleitung für Hydraulikflüssigkeit und ausgangsseitig mit dem Kolbenraum (11, 11.1) des wenigstens einen Betätigungszylinders (9, 9.1) verbunden ist.

2. Schaltbare Kupplungsanordnung nach Anspruch 1, **dadurch gekennzeichnet, dass**
- die erste Pumpanordnung (27, 28, 32, 33, 35) einen ersten Pumpkolben (32) aufweist, der mittels einer ersten Exzenteranordnung (33) oder Nockenanordnung an dem ersten Teil der Kupplung beaufschlagbar ist, derart, dass bei einer Drehzahldifferenz des ersten Teils der Kupplung zum zweiten Teils der Kupplung die erste Exzenteranordnung (33) oder die erste Nockenanordnung den ersten Pumpkolben (32) in alternierende Bewegung versetzt und
- die zweite Pumpanordnung (27, 28, 30, 31, 35) einen zweiten Pumpkolben (31) aufweist, der mittels einer zweiten Exzenteranordnung (30) oder Nockenanordnung, die an dem Gehäuse des Nebenaggregates (1) oder dem Gehäuse der Brennkraftmaschine gestellfest angeordnet ist, beaufschlagbar ist, derart, dass bei einem Verdrehen des zweiten Teils der Kupplung zu der zweiten Exzenteranordnung (30) oder Nockenanordnung der zweite Pumpkolben (31) in eine alternierende Bewegung versetzt wird.

3. Schaltbare Kupplungsanordnung nach Ansprüchen 1 oder 2, **dadurch gekennzeichnet, dass** die erste Pumpanordnung (27, 28, 32, 33, 35) einen Pumpkolbenraum (28) aufweist, der über ein erstes in Richtung Pumpkolbenraum (28) öffnendes Rückschlagventil (27) mit der Versorgungsleitung für die Hydraulikflüssigkeit verbunden ist und über ein zweites in Richtung Pumpkolbenraum (28) schließendes Rückschlagventil (35) eine Verbindung zu einem Kolbenraum (11, 11.1) des wenigstens einen Betätigungszylinders (9, 9.1) aufweist.

4. Schaltbare Kupplungsanordnung nach Ansprüchen 1 oder 2, **dadurch gekennzeichnet, dass** die zweite Pumpanordnung (27, 28, 30, 31, 35) einen Pumpkolbenraum (28) aufweist, der über ein erstes in Richtung Pumpkolbenraum (28) öffnende Rückschlagventil (27) mit der Versorgungsleitung für die Hydraulikflüssigkeit verbunden ist und über ein zweites in Richtung Pumpkolbenraum (28) schließendes Rückschlagventil (35) eine Verbindung zu einem Kolbenraum (11, 11.1) des wenigstens einen Betätigungszylinders (9, 9.1) aufweist.

5. Schaltbare Kupplungsanordnung nach Ansprüchen 1 oder 2, **dadurch gekennzeichnet; dass** die erste Pumpanordnung (27, 28, 32, 33, 35) und die zweite Pumpanordnung (27, 28, 30, 31, 35) einen gemeinsamen Pumpkolbenraum (28) aufweisen, der über ein erstes in Richtung Pumpkolbenraum (28) öffnendes Rückschlagventil (27) mit der Versorgungsleitung für die Hydraulikflüssigkeit verbunden ist und über ein zweites in Richtung Pumpkolbenraum (28) schließendes Rückschlagventil (35) eine Verbindung zu einem Kolbenraum (11, 11.1) des wenigstens einen Betätigungszylinders (9, 9.1) aufweist.

6. Schaltbare Kupplungsanordnung nach Ansprüchen 3 bis 6, **dadurch gekennzeichnet, dass** die Rückschlagventile (27, 35) in Schließrichtung federbeaufschlagt sind.

7. Schaltbare Kupplungsanordnung nach einem der vorhergehenden Ansprüche, **dadurch gekennzeichnet, dass** in dem zweiten Teil der Kupplung, in der Zuleitung für die Hydraulikflüssigkeit zum Pumpkolbenraum (28), eine in Öffnungsrichtung federbeaufschlagte Saugdrossel (23) angeordnet ist, die in Schließrichtung durch den im Kolbenraum (11, 11.1) des wenigstens einen Betätigungszylinders (9, 9.1) herrschenden Druck, entgegen der Federkraft beaufschlagt ist.

8. Schaltbare Kupplungsanordnung nach einem der vorhergehenden Ansprüche, **dadurch gekennzeichnet, dass**
- in dem zweiten Teil der Kupplung, zwischen dem Kolbenraum (11, 11.1) des wenigstens einen Betätigungszylinders (9, 9.1) und der Zuleitung für die Hydraulikflüssigkeit ein Absteuerkolben (36) in dem zweiten Teil der Kupplung angeordnet ist,
- der Absteuerkolben (36) mit seiner größere Fläche von dem in der Zuleitung herrschenden Druck und mit seiner gegenüberliegenden kleineren Fläche durch den im Kolbenraum (11, 11.1) des wenigstens einen Betätigungszylinders (9, 9.1) herrschenden Druck beaufschlagt ist,
- die Größe der jeweiligen Flächen so bemessen ist, dass der Absteuerkolben (36) zum Kolbenraum (11, 11.1) des wenigstens einen Betätigungszylinders (9, 9.1) hin nur dann öffnet, wenn der Druck in der Zuleitung ein vorgegebenes Maß unterschreitet.

9. Schaltbare Kupplungsanordnung nach einem der vorhergehenden Ansprüche, **dadurch gekennzeichnet, dass** der Kupplungsmechanismus eine Segmentkupplung ist, wobei die die Kupplungssegmente bildende Betätigungszylinder (9) konzentrisch zur Drehachse (6), radial nach außen wirkend angeordnet sind und, bei Druckanstieg in den verbundenen Kolbenräumen (11, 11.1) der Betätigungszylinder (9, 9.1), die Kolben (10, 10.1) die an ihnen angeordneten Reibbelägen (7) entgegen der rückstellenden Kraft einer Ringfeder (8) radial nach außen an die Innenseite (4a) der am ersten Kupplungsteil angeordneten Kupplungsglocke (4) pressen.

10. Schaltbare Kupplungsanordnung nach einem der vorhergehenden Ansprüche, **dadurch gekennzeichnet, dass** der Kupplungsmechanismus eine Scheibenkupplung ist, wobei die Betätigungszylinder (9.1) konzentrisch zur Drehachse (6), axial in Richtung auf den ersten Teil der Kupplung zu wirkend angeordnet sind und, bei Druckanstieg in den verbundenen Kolbenräumen (11.1) der Betätigungszylinder (9.1), die Kolben (10.1) die an beiden Kupplungsteilen konzentrisch zur Drehachse (6) angeordneten Reibbelägen (47, 48) entgegen der rückstellenden Kraft einer Feder aneinander pressen

11. Schaltbare Kupplungsanordnung nach einem der vorhergehenden Ansprüche, **dadurch gekennzeichnet, dass**
- der zweite Teil der Kupplung mit einer Kurbelwelle (2) eines Luftpressers (1) drehfest verbunden ist, der ein in einem Fahrzeug angeordnetes Druckluftsystem (45) mit Druckluft versorgt,
- an dem Luftpresser (1) eine aus einem Vorratsbehälter (15) der Brennkraftmaschine gespeiste Schmierölzuführung (18) angeschlossen ist,
- die Schmierölzuführung (18) des Luftpressers (1) mit einem Niederdruckraum (22) der Kupplungsanordnung verbunden ist,
- das Öl aus der Schmierölzuführung (18) des Luftpressers (1) als Hydraulikflüssigkeit für die schaltbare Kupplungsanordnung dient,
- in einer Verbindungsleitung zwischen dem Vorratsbehälter (15) der Brennkraftmaschine und der Schmierölzuführung (18) des Luftpressers (1) ein schaltbares Ventil (16) angeordnet ist,
- das Schalten des schaltbaren Ventils (16) in Abhängigkeit vom Luftdruck in dem Druckluftsystem (45) dergestalt erfolgt, dass bei unterschreiten eines unteren Druckniveaus das schaltbare Ventil (16) öffnet und bei überschreiten eines oberen Druckniveaus das schaltbare Ventil (16) schließt.

12. Schaltbare Kupplungsanordnung nach Anspruch 11, **dadurch gekennzeichnet, dass**
- die Schmierölzuführung (18) des Luftpressers (1) mit einer in der Kurbelwelle (2) des Luftpressers (1) verlaufenden Ölbohrung (21 a, 21 b) verbunden ist,
- die Ölbohrung (21a, 21b) eine Verbindung zu dem in dem zweiten Teil der Kupplung angeordneten Niederdruckraum (22) für die Hydraulikflüssigkeit aufweist.

## Claims

1. Switchable clutch arrangement to couple an ancillary unit to the drive shaft of an internal-combustion engine operated as the motive drive in a vehicle, whereby
- there is provided a hydraulically actuated clutch consisting of a first part that ican be rotatably connected to the drive shaft of the internal-combustion engine and a second part that can be rotatably connected to the drive shaft of the ancillary unit,
- there is provided a first pump arrangement (27, 28, 32, 33, 35) that actuates the clutch and is arranged in the second part of the clutch and to which a force that actuates the pump mechanism is applied by the relative rotary movement of the second part of the clutch relative to the first part of the clutch,
**characterised in that**
- the first pump arrangement (27, 28, 32, 33, 35) is connected on its input side via an externally switchable valve (16) to a hydraulic fluid supply pipe and has on its output side a connection to a plunger space (11, 11.1) of at least one actuating cylinder (9, 9.1) whose plunger (10, 10.1) acts on the clutch mechanism in such a way that, when the hydraulic fluid is conveyed by means of the first pump arrangement (27, 28, 32, 33, 35) from the supply pipe into the actuating cylinder (9, 9.1), the clutch faces are pressed together against the force of a return spring (8),
- in the second part of the clutch in which the first pump arrangement (27, 28, 32, 33, 35) is situated there is arranged a second pump arrangement (27, 28, 30, 31, 35) to which is applied, through the rotary movement of the second part of the clutch relative to the housing of the ancillary unit (1) or relative to the housing of the internal-combustion engine, a force that actuates the pump mechanism of the second pump arrangement (27, 28, 30, 31, 35),
- the second pump arrangement (27, 28, 30, 31, 35) is connected on its input side to the hydraulic fluid supply pipe via the switchable valve (16) and on its output side to the plunger space (11, 11.1) of the at least one actuating cylinder (9, 9.1).

2. Switchable clutch arrangement according to Claim 1, **characterised in that**
- the first pump arrangement (27, 28, 32, 33, 35) has a first pump plunger (32) on which a force can be exerted by means of a first eccentric arrangement (33) or cam arrangement on the first part of the clutch so that, in the presence of a rotational speed difference between the first part of the clutch and the second part of the clutch, the first eccentric arrangement (33) or first cam arrangement brings the first pump plunger (32) into reciprocating movement, and
- the second pump arrangement (27, 28, 30, 31, 35) has a second pump plunger (31) on which a force can be exerted by means of a second eccentric arrangement (30) or cam arrangement arranged in a fixed stationary position on the housing of the ancillary unit (1) or housing of the combustion engine in such a way that the second pump plunger (31) is brought into reciprocating movement when the second part of the clutch rotates relative to the second eccentric arrangement (30) or cam arrangement. ,

3. Switchable clutch arrangement according to Claims 1 or 2, **characterised in that** the first pump arrangement (27, 28, 32, 33, 35) has a pump plunger space (28) that is connected to the hydraulic fluid supply pipe via a first non-return valve (27) opening towards the pump plunger space (28) and has a connection to a plunger space (11, 11.1) of the at least one actuating cylinder (9, 9.1) through a second non-return valve (35) closing in the direction of the pump plunger space (28).

4. Switchable clutch arrangement according to Claims 1 or 2, **characterised in that** the second pump arrangement (27, 28, 30, 31, 35) has a pump plunger space (28) that is connected to the hydraulic fluid supply pipe via a first non-return valve (27) opening towards the pump plunger space (28) and has a connection to a plunger space (11, 11.1) of the at least one actuating cylinder (9, 9.1) through a second non-return valve (35) closing in the direction of the pump plunger space (28).

5. Switchable clutch arrangement according to Claims 1 or 2, **characterised in that** the first pump arrangement (27, 28, 32, 33, 35) and the second pump arrangement (27, 28, 30, 31, 35) have a shared pump plunger space (28) that is connected to the hydraulic fluid supply pipe via a first non-return valve (27) opening towards the pump plunger space (28) and has a connection to a piston space (11, 11.1) of at the least one actuating cylinder (9, 9.1) through a second non-return valve (35) closing in the direction of the pump plunger space (28).

6. Switchable clutch arrangement according to Claims 3 to 6, **characterised in that** the non-return valves (27, 35) are spring-loaded in the closing direction.

7. Switchable clutch arrangement according to one of the foregoing Claims, **characterised in that** a suction restrictor valve (23), which is spring-loaded in the opening direction and to which a force is applied against the spring force by the pressure prevailing in the plunger space (11, 11.1) of the at least one actuating cylinder (9, 9.1), is arranged in the second part of the clutch in the hydraulic fluid supply pipe to the pump plunger space (28).

8. Switchable clutch arrangement according to one of the foregoing Claims, **characterised in that**
- in the second part of the clutch a relief plunger (36) is arranged between the plunger space (11, 11.1) of the at least one actuating cylinder (9, 9.1) and the hydraulic fluid supply pipe (36),
- a force is exerted on the larger face of the relief plunger (36) by the pressure prevailing in the supply pipe and on its opposite smaller face by the pressure prevailing in the plunger space (11, 11.1) of the at least one actuating cylinder (9, 9.1),
- the size of the respective faces is dimensioned so that the relief plunger (36) opens towards the plunger space (11, 11.1) of the at least one actuating cylinder (9, 9.1) only when the pressure in the supply pipe falls below a pre-determined magnitude.

9. Switchable clutch arrangement according to one of the foregoing Claims, **characterised in that** the clutch mechanism is a segment clutch, whereby the actuating cylinders (9) forming the clutch segments are arranged concentrically relative to the axis of rotation (6) and acting radially outwards and, when the pressure increases in the associated plunger spaces (11, 11.1) of the actuating cylinders (9, 9.1), the plungers (10, 10.1) press the friction linings (7) arranged on them radially outwards against the return force of an annular spring (8) and onto the inner surface (4a) of the clutch bell housing (4) arranged on the first part of the clutch.

10. Switchable clutch arrangement according to one of the foregoing Claims, **characterised in that** the clutch mechanism is a disc clutch, whereby the actuating cylinders (9.1) are arranged concentrically relative to the axis of rotation (6) and acting axially towards the first part of the clutch and, when the pressure increases in the associated plunger spaces (11.1) of the actuating cylinders (9.1), the plungers (10.1) press the friction linings (47, 48) arranged concentrically relative to the axis of rotation (6) on the two parts of the clutch onto one another against the return force of a spring.

11. Switchable clutch arrangement according to one of the foregoing Claims, **characterised in that**
- the second part of the clutch is connected in a torsionally rigid manner to a crankshaft (2) of an air compressor (1) that supplies compressed air to a compressed-air system (45) arranged in a vehicle,
- a lubricating oil supply (18) fed from the reservoir (15) of the internal-combustion engine is connected to the air compressor (1),
- the lubricating oil supply (18) for the air compressor (1) is connected to a low pressure space (22) of the clutch arrangement,
- the oil from the lubricating oil supply (18) for the air compressor (1) acts as hydraulic fluid for the switchable clutch arrangement,
- a switchable valve (16) is arranged in a connection pipe between the reservoir (15) of the combustion engine and the lubricating oil supply (18) for the air compressor (1),
- the switching of the switchable valve (16) takes place depending on the air pressure in the compressed-air system (45) in such a way that the switchable valve (16) opens when the pressure falls below a lower level and the switchable valve (16) closes when the pressure exceeds an upper level.

12. Switchable clutch arrangement according to Claim 11, **characterised in that**
- the lubricating oil supply (18) for the air compressor (1) is connected to an oil gallery (21 a, 21 b) running in the crankshaft (2) of the air compressor (1),
- the oil gallery (21 a, 21 b) has a connection to the low pressure space (22) for the hydraulic fluid arranged in the second half of the clutch.

## Revendications

1. Dispositif d'embrayage commutable pour accoupler un organe auxiliaire à l'arbre moteur d'une machine à combustion interne faisant office de moteur de propulsion dans un véhicule, auquel cas
- un embrayage à actionnement hydraulique est prévu, qui consiste en une première partie qui est reliée à l'arbre moteur de la machine à combustion interne, cette liaison pouvant être rotative, et en une deuxième partie qui est reliée à l'arbre moteur de l'organe auxiliaire, cette liaison pouvant être rotative,
- un premier dispositif de pompage (27, 28, 32, 33, 35) actionnant l'embrayage est prévu, qui est disposé dans la deuxième partie de l'embrayage et qui, du fait du mouvement rotatif relatif de la deuxième partie de l'embrayage par rapport à la première partie de l'embrayage, est sollicité par une force actionnant le mécanisme de pompage,
**caractérisé en ce**
- **que** le premier dispositif de pompage (27, 28, 32, 33, 35) est relié, côté entrée, à une conduite d'alimentation en liquide hydraulique par l'intermédiaire d'une vanne extérieure commutable (16) et présente, côté sortie, une liaison avec une chambre de piston (11, 11.1) d'au moins un vérin d'actionnement (9, 9.1) dont le piston (10, 10.1) agit sur le mécanisme d'embrayage de telle manière que les surfaces de l'embrayage sont pressées l'une contre l'autre contre la force d'un ressort de rappel (8) lors du refoulement du liquide hydraulique par le biais du premier dispositif de pompage (27, 28, 32, 33, 35) de la conduite d'alimentation dans le vérin d'actionnement (9, 9.1),
- **qu'**un deuxième dispositif de pompage (27, 28, 30, 31, 35) est disposé dans la deuxième partie de l'embrayage dans laquelle se trouve le premier dispositif de pompage (27, 28, 32, 33, 35), qui est sollicité, du fait du mouvement rotatif relatif de la deuxième partie de l'embrayage par rapport au carter de l'organe auxiliaire (1) ou au carter de la machine à combustion interne, par une force actionnant le mécanisme de pompage du deuxième dispositif de pompage (27, 28, 30, 31, 35),
- **que** le deuxième dispositif de pompage (27, 28, 30, 31, 35) est relié, côté entrée, à la conduite d'alimentation en liquide hydraulique par l'intermédiaire de la vanne commutable (16) et, côté sortie, à la chambre de piston (11, 11.1) d'au moins un vérin d'actionnement (9, 9.1).

2. Dispositif d'embrayage commutable selon la revendication 1, **caractérisé en ce que**
- le premier dispositif de pompage (27, 28, 32, 33, 35) présente un premier piston de pompage (32), qui peut être sollicité au moyen d'un premier dispositif d'excentrique (33) ou dispositif de came sur la première partie de l'embrayage de telle manière qu'en cas de différence de régime de rotation entre la première partie de l'embrayage et la deuxième partie de l'embrayage le premier dispositif d'excentrique (33) ou le premier dispositif de came met le premier piston de pompage (32) en un mouvement alternatif et
- le deuxième dispositif de pompage (27, 28, 30, 31, 35) présente un deuxième piston de pompage (31), qui peut être sollicité au moyen d'un deuxième dispositif d'excentrique (30) ou dispositif de came, qui est disposé de manière fixe sur le carter de l'organe auxiliaire (1) ou sur le carter de la machine à combustion interne de telle manière que le deuxième piston de pompage (31) est mis en un mouvement alternatif lorsque la deuxième partie de l'embrayage tourne par rapport au deuxième dispositif d'excentrique (30) ou dispositif de came.

3. Dispositif d'embrayage commutable selon la revendication 1 ou 2, **caractérisé en ce que** le premier dispositif de pompage (27, 28, 32, 33, 35) dispose d'une chambre de piston de pompage (28) qui est reliée à la conduite d'alimentation en liquide hydraulique par l'intermédiaire d'un premier clapet anti-retour (27) ouvrant en direction de la chambre de piston de pompage (28) et qui présente une liaison avec une chambre de piston (11, 11.1) d'au moins un vérin d'actionnement (9, 9.1) par l'intermédiaire d'un deuxième clapet anti-retour (35) fermant en direction de la chambre de piston de pompage (28).

4. Dispositif d'embrayage commutable selon la revendication 1 ou 2, **caractérisé en ce que** le deuxième dispositif de pompage (27, 28, 30, 31, 35) dispose d'une chambre de piston de pompage (28) qui est reliée à la conduite d'alimentation en liquide hydraulique par l'intermédiaire d'un premier clapet anti-retour (27) ouvrant en direction de la chambre de piston de pompage (28) et qui présente une liaison avec une chambre de piston (11, 11.1) d'au moins un vérin d'actionnement (9, 9.1) par l'intermédiaire d'un deuxième clapet anti-retour (35) fermant en direction de la chambre de piston de pompage (28).

5. Dispositif d'embrayage commutable selon la revendication 1 ou 2, **caractérisé en ce que** le premier dispositif de pompage (27, 28, 32, 33, 35) et le deuxième dispositif de pompage (27, 28, 30, 31, 35) disposent d'une chambre de piston de pompage (28) commune qui est reliée à la conduite d'alimentation en liquide hydraulique par l'intermédiaire d'un premier clapet anti-retour (27) ouvrant en direction de la chambre de piston de pompage (28) et qui présente une liaison avec une chambre de piston (11, 11.1) d'au moins un vérin d'actionnement (9, 9.1) par l'intermédiaire d'un deuxième clapet anti-retour (35) fermant en direction de la chambre de piston de pompage (28).

6. Dispositif d'embrayage commutable selon les revendications 3 à 6, **caractérisé en ce que** les clapets anti-retour (27, 35) sont sollicités par ressort dans le sens de fermeture.

7. Dispositif d'embrayage commutable selon l'une des revendications précitées, **caractérisé en ce qu'**un orifice calibré d'aspiration (23), sollicité par ressort dans le sens d'ouverture et sollicité dans le sens de fermeture par la pression régnant dans la chambre de piston (11, 11.1) d'au moins un vérin d'actionnement (9, 9.1) contre la force du ressort, est disposé dans la deuxième partie de l'embrayage dans la conduite d'amenée du liquide hydraulique vers la chambre de piston de pompage (28).

8. Dispositif d'embrayage commutable selon l'une des revendications précitées, **caractérisé en ce**
- **qu'**un piston de décharge (36) est disposé dans la deuxième partie de l'embrayage entre la chambre de piston (11, 11.1) d'au moins un vérin d'actionnement (9, 9.1) et la conduite d'amenée du liquide hydraulique,
- **que** le piston de décharge (36) est sollicité sur sa surface plus grande par la pression régnant dans la conduite d'amenée et sur sa surface plus petite située du côté opposé par la pression régnant dans la chambre de piston (11, 11.1) d'au moins un vérin d'actionnement (9, 9.1),
- **que** ces surfaces sont tellement dimensionnées que le piston de décharge (36) n'ouvre vers la chambre de piston (11, 11.1) d'au moins un vérin d'actionnement (9, 9.1) que si la pression dans la conduite d'amenée passe en dessous d'une valeur prédéfinie.

9. Dispositif d'embrayage commutable selon l'une des revendications précitées, **caractérisé en ce que** le mécanisme d'embrayage est un embrayage en segments, les vérins d'actionnement (9) constituant les segments de l'embrayage étant disposés de manière concentrique par rapport à l'axe de rotation (6) et agissant radialement vers l'extérieur, et qu'en cas d'augmentation de la pression dans les chambres de piston (11, 11.1) reliées entre elles des vérins d'actionnement (9, 9.1), les pistons (10, 10.1) pressent les garnitures de friction (7) disposées sur ces derniers radialement vers l'extérieur contre la force de rappel d'un ressort-bague sur la face intérieure (4a) de la cloche d'embrayage (4) disposée sur la première partie de l'embrayage.

10. Dispositif d'embrayage commutable selon l'une des revendications précitées, **caractérisé en ce que** le mécanisme d'embrayage est un embrayage à disque, les vérins d'actionnement (9.1) étant disposés de manière concentrique par rapport à l'axe de rotation (6) et agissant axialement en direction de la première partie de l'embrayage et qu'en cas d'augmentation de la pression dans les chambres de piston (11.1) reliées entre elles des vérins d'actionnement (9.1), les pistons (10.1) pressent les garnitures de friction (47, 48) disposées sur les deux parties de l'embrayage de manière concentrique par rapport à l'axe de rotation (6) l'une contre l'autre contre la force de rappel d'un ressort.

11. Dispositif d'embrayage commutable selon l'une des revendications précitées,
**caractérisé en ce**
- **que** la deuxième partie de l'embrayage est reliée de manière anti-rotative à un vilebrequin (2) d'un compresseur d'air (1) qui alimente en air comprimé un système pneumatique (45) disposé sur un véhicule,
- **qu'**une conduite d'amenée d'huile de lubrification (18) alimentée à partir d'un réservoir (15) de la machine à combustion interne est raccordée sur le compresseur d'air (1),
- **que** la conduite d'amenée d'huile de lubrification (18) du compresseur d'air (1) est reliée à une chambre basse pression (22) du dispositif d'embrayage,
- **que** l'huile en provenance de la conduite d'amenée d'huile de lubrification (18) du compresseur d'air (1) sert de liquide hydraulique pour le dispositif d'embrayage commutable,
- **qu'**une vanne commutable (16) est disposée dans une conduite de liaison entre le réservoir (15) de la machine à combustion interne et la conduite d'amenée d'huile de lubrification (18) du compresseur d'air (1),
- **que** la commutation de la vanne commutable (16) s'effectue en fonction de la pression d'air dans le système pneumatique (45) de telle manière que la vanne commutable (16) ouvre en passant en dessous d'un niveau de pression inférieur et que la vanne commutable (16) ferme en passant au-dessus d'un niveau de pression supérieur.

12. Dispositif d'embrayage commutable selon la revendication 11, **caractérisé en ce que**
- la conduite d'amenée d'huile de lubrification (18) du compresseur d'air (1) est reliée à un canal d'huile (21a, 21b) ménagé dans le vilebrequin (2) du compresseur d'air (1),
- le canal d'huile (21a, 21b) présente une liaison avec la chambre basse pression (22) pour le liquide hydraulique disposée dans la deuxième partie de l'embrayage.
